# EUROPÄISCHE PATENTSCHRIFT

(11) **EP 3 296 178 B1**
(45) Veröffentlichungstag und Bekanntmachung des Hinweises auf die Patenterteilung: **22.04.2020**
(21) Anmeldenummer: 17191811.3
(22) Anmeldetag: 19.09.2017
(51) Int. Cl.: B61D 19/02

(54) **FAHRZEUG MIT EINER WANDLERANORDNUNG**
VEHICLE WITH A CONVERTER ASSEMBLY
VÉHICULE DOTÉ D'UN DISPOSITIF TRANSDUCTEUR

(30) Priorität: 19.09.2016 DE 202016005711 U; 23.11.2016 DE 202016106557 U
(43) Veröffentlichungstag der Anmeldung: 21.03.2018
(73) Patentinhaber: Gebr. Bode GmbH & Co. KG, 34123 Kassel (DE)
(72) Erfinder: Blumenstein, Felix, 37235 Hess. Lichtenau (DE); Bachmann, Guido, 34302 Guxhagen (DE)
(74) Vertreter: Patentanwälte Bauer Vorberg Kayser

(56) Entgegenhaltungen:
- EP-A2- 1 700 763
- WO-A1-2011/023602
- DE-A1-102014 113 572
- DE-A1-102014 213 864

## Beschreibung

Die Erfindung betrifft ein Fahrzeug mit einer Wandleranordnung mit den Merkmalen des Oberbegriffs von Anspruch 1.

Bei Fahrzeugen und insbesondere bei Fahrzeugen des öffentlichen Personenverkehrs gibt es verschiedene Anwendungsfälle, bei denen unterschiedliche Arten von Wandlern auch außerhalb des Fahrzeugs - und damit außerhalb einer Fahrzeughülle - verwendet werden. Unter den Begriff Wandler sind vorliegend sowohl Sensoren zur Erfassung verschiedener Zustände als auch Lichtstrahler und sonstige Arten von Vorrichtungen zu verstehen, welche entweder Signale erfassen oder aussenden. Regelmäßig geht es dabei um Zielbereiche des Wandlers, welche eine Anordnung des Wandlers erforderlich machen, die das seitliche Lichtraumprofil des Fahrzeugs beeinflusst. Mit anderen Worten muss der Wandler regelmäßig so angeordnet werden, dass sich insbesondere in seitlicher Richtung ein größeres - und damit breiteres - Lichtraumprofil ergibt als ohne diesen Wandler oder bei einer anderen Anordnung des Wandlers. Speziell bei Fahrzeugen, deren Wagenhülle eine Bombierung aufweist, ist es zum Erfassen oder zum Aussenden in einen Bereich unterhalb der Bombierung regelmäßig erforderlich, den Wandler "herausragen" zu lassen. Diese durch den Wandler bedingte Vergrößerung des Lichtraumprofils des Fahrzeugs ist aber nicht nur deshalb ungünstig, weil sie im Prinzip auf Kosten von Bauraum im Innern des Fahrzeugs erfolgt, sondern auch deswegen, weil die entsprechend "herausragende" Anordnung des Wandlers sowohl Windgeräusche verursachen als auch den Luftwiderstandswert des Fahrzeugs empfindlich verschlechtern kann.

Die DE 10 2014 113 572 A1 beschreibt ein Türsystem für ein Fahrzeug des öffentlichen Personenverkehrs mit mindestens einer Türöffnung und einer die Türöffnung verschließenden Tür. Dieses ist durch eine Sensoreinheit gekennzeichnet, die einen Fahrgastraum im Bereich der Türöffnung dreidimensional berührungslos abtastet.

Die DE 10 2014 213 864 A1, von welcher die vorliegende Erfindung als nächstkommend ausgeht, beschreibt eine Vorrichtung und ein Verfahren zur Positionierung einer Hilfseinrichtung im Türbereich eines Schienenfahrzeugs, wobei die Vorrichtung mindestens einen relativ zum Schienenfahrzeug ortsfest anordenbaren Teil umfasst, wobei der ortsfeste Teil mindestens ein Befestigungsmittel zur Befestigung des ortsfesten Teils an dem Schienenfahrzeug umfasst, wobei die Vorrichtung mindestens einen relativ zum ortsfesten Teil beweglichen Teil umfasst, wobei die Hilfseinrichtung am beweglichen Teil angeordnet ist, wobei der bewegliche Teil aktorgestützt zwischen einem eingefahrenen und ausgefahrenen Zustand bewegbar ist.

Vor diesem Hintergrund besteht die Aufgabe der Erfindung darin, ein Fahrzeug mit einer Wandleranordnung so weiterzuentwickeln und zu verbessern, dass die Wandleranordnung sowohl schwer erreichbare Zielbereiche erreichen kann als auch einen möglichst geringen Einfluss auf das Lichtraumprofil des Fahrzeugs hat.

Bezogen auf ein Fahrzeug mit einer Wandleranordnung mit den Merkmalen des Anspruchs 1 wird diese Aufgabe durch die Merkmale des kennzeichnenden Teils von Anspruch 1 gelöst.

Wesentlich für die Erfindung ist die Erkenntnis, dass durch Vorsehen einer Ausfahrmechanik die Wandleranordnung wahlweise zwischen einer ausgefahrenen Betriebsposition, in welcher der gewünschte Zielbereich gut erfassbar ist, und einer eingefahrenen Ruheposition, in welcher das Lichtraumprofil nicht oder kaum durch die Wandleranordnung beeinflusst wird, verstellt werden kann. Regelmäßig ist nämlich der Betrieb der Wandleranordnung nur bei Stillstand des Fahrzeugs vorgesehen während umgekehrt ebenso regelmäßig das Lichtraumprofil des Fahrzeugs nur während der Fahrt des Fahrzeugs von Bedeutung ist.

Das vorschlagsgemäße Fahrzeug, bei welchem es sich insbesondere um ein Fahrzeug des öffentlichen Personenverkehrs handeln kann, weist eine Wandleranordnung zur Signalumwandlung auf. Bei dieser Wandleranordnung kann es sich grundsätzlich um eine beliebige Vorrichtung handeln, welches ein empfangenes elektrisches Signal in ein prinzipiell beliebiges anders Signal umwandelt oder alternativ oder zusätzlich ein ebenso prinzipiell beliebiges empfangenes Signal in ein auszugebendes elektrisches Signal umwandelt. Verschiedene Beispiele für solche Wandleranordnungen werden untenstehend genannt und beschrieben.

Das vorschlagsgemäße Fahrzeug weist ferner eine Wagenhülle auf, welche Wagenhülle ein Fahrzeuglichtraumprofil in Fahrtrichtung des Fahrzeugs definiert. Hier und nachfolgend ist unter dem Begriff der Wagenhülle die Gesamtheit der Bestandteile des Fahrzeugs zu verstehen, welche die äußere Begrenzung und damit die Hülle des Fahrzeugs bilden. Insbesondere kann also der Aufbau des Fahrzeugs und damit speziell die Karosserie oder der Wagenkasten zu der Wagenhülle zählen. Das Fahrzeuglichtraumprofil ist dann das Lichtraumprofil in Fahrtrichtung des Fahrzeugs, welche Fahrtrichtung regelmäßig der Längsrichtung eines länglich ausgeformten Fahrzeugs entspricht. Das Fahrzeuglichtraumprofil ergibt sich gemäß der obigen Bestimmung aus der Wagenhülle.

Vorschlagsgemäß ist die Wandleranordnung auf einen von der Wandleranordnung beabstandeten Zielbereich außerhalb der Wagenhülle gerichtet. Mit anderen Worten arbeitet die Wandleranordnung insoweit berührungslos, dass das oben erwähnte prinzipiell beliebige empfangene Signal von diesem beabstandeten Zielbereich - und damit berührungslos zur Wandleranordnung - empfangen wird. Alternativ oder zusätzlich kann auf das empfangene elektrische Signal das ebenfalls soeben erwähnte prinzipiell beliebige ausgegebene Signal in diesen beabstandeten Zielbereich ausgegeben werden, sodass insofern diese Ausgabe berührungslos erfolgt.

Das vorschlagsgemäße Fahrzeug weist eine Ausfahrmechanik zum Verstellen der Wandleranordnung zwischen einem eingefahrenen und einem ausgefahrenen Zustand auf. Dabei entsprechen der eingefahrene Zustand und der ausgefahrene Zustand der Wandleranordnung einer jeweiligen unterschiedlichen Position der Wandleranordnung. Insofern kann auch festgestellt werden, dass die Ausfahrmechanik zum Verstellen der Wandleranordnung zwischen einer eingefahrenen und einer ausgefahrenen Position eingerichtet ist.

Eine bevorzugte Ausführungsform ist dadurch gekennzeichnet, dass die Wandleranordnung im ausgefahrenen Zustand gegenüber dem eingefahrenen Zustand das Fahrzeuglichtraumprofil quer zur Fahrtrichtung erweitert. Mit anderen Worten weist das Fahrzeug im ausgefahrenen Zustand der Wandleranordnung ein Fahrzeuglichtraumprofil auf, welches in einer Seitenrichtung quer zur Fahrtrichtung eine größere Ausdehnung hat als im eingefahrenen Zustand der Wandleranordnung. Bevorzugt ist diese Seitenrichtung die Horizontalrichtung, wobei sich Richtungsangabe "horizontal" auf die Lage des Fahrzeugs bezieht.

Eine weitere bevorzugte Ausführungsform ist dadurch gekennzeichnet, dass die Wagenhülle eine Türöffnung in der Wagenhülle zum Ein- und Ausstieg aufweist. Speziell kann es sich um eine Türöffnung zum Ein- und Ausstieg von zu befördernden Personen - und damit von Passagieren - handeln. Bevorzugt ist es weiter, dass der Zielbereich im ausgefahrenen Zustand der Wandleranordnung einen unteren Bereich umfasst, welcher sich unterhalb der Wandleranordnung befindet. Dies bedeutet, dass eine Höhe dieses unteren Bereichs - wiederum bezogen auf die Lage des Fahrzeugs und eine entsprechende vertikale Richtung - geringer ist als diejenige der Wandleranordnung im ausgefahrenen Zustand der Wandleranordnung. Mit anderen Worten ist die Wandleranordnung im weitesten Sinne nach unten gerichtet. Dabei kann grundsätzlich in einer horizontalen Richtung ein relativer Versatz zwischen der Wandleranordnung und diesem unteren Bereich vorhanden sein. Bevorzugt ist dabei, dass der untere Bereich sich im Wesentlichen senkrecht unterhalb der Wandleranordnung befindet, sodass also die Wandleranordnung im Wesentlichen senkrecht nach unten ausgerichtet ist.

Gemäß einer bevorzugten Ausführungsform ist vorgesehen, dass der Zielbereich im Wesentlichen kreissektorartig ausgeformt ist und von der Wandleranordnung ausgeht. Mit anderen Worten ist die Wandleranordnung dann an dem fiktiven Kreismittelpunkt des durch den Zielbereich im Wesentlichen gebildeten Kreissektors angeordnet. Hier ist es weiter bevorzugt, dass der Zielbereich im Wesentlichen vertikal nach unten ausgerichtet ist.

Eine bevorzugte Ausführungsform ist dadurch gekennzeichnet, dass das Fahrzeug ein Schienenfahrzeug zur Personenbeförderung oder ein Bus zur Personenbeförderung ist.

Eine weitere bevorzugte Ausführungsform ist dadurch gekennzeichnet, dass die Wandleranordnung eine Strahlvorrichtung zum Aussenden von elektromagnetischer Strahlung in den Zielbereich aufweist. Es kann sich dabei insbesondere um Licht und speziell um sichtbare elektromagnetische Strahlung handeln. Ebenso kann es sich um Infrarotstrahlung handeln. Hier ist es weiter bevorzugt, dass das Fahrzeug eine Reflektionsvorrichtung zur Reflektion der ausgesendeten elektromagnetischen Strahlung in dem Zielbereich aufweist. Damit kann die Wandleranordnung die Reflektionsvorrichtung, bei welcher es sich um eine Signalisierungsvorrichtung für Passagiere handeln kann, gezielt anstrahlen. Bevorzugt ist die Reflektionsvorrichtung dabei Bestandteil der Wagenhülle.

Bei dem vorschlagsgemäßen Fahrzeug weist die Wandleranordnung eine Sensoranordnung zur Erfassung in dem Zielbereich auf. Grundsätzlich kann es sich dabei um eine beliebige Sensoranordnung handeln, so etwa um eine Sensoranordnung zur kapazitiven Erfassung. Bevorzugt handelt es sich jedoch um eine elektromagnetische Sensoranordnung zur Erfassung von elektromagnetischen Wellen, beispielsweise um eine Licht-Sensoranordnung und/oder um eine Infrarot-Sensoranordnung.

Grundsätzlich handelt es sich bei einer Sensoranordnung um eine Vorrichtung, welche auf ein Signal aus dem Zielbereich ein elektrisches Signal erzeugt. Dies kann einerseits rein passiv erfolgen. Es kann aber auch sein, das eine solche Sensoranordnung nicht nur rein passiv arbeitet, sondern zur Erfassung wie beschrieben auch ein Signal in den Zielbereich ausgibt, um basierend auf diesem in den Zielbereich ausgegebenen Signal wiederum ein Signal zu empfangen und darauf basierend das elektrische Signal zu erzeugen. Folglich kann die Sensoranordnung für seine Erfassungsfunktion sowohl für ein Aussenden in den Zielbereich als auch für ein Empfangen aus dem Zielbereich eingerichtet sein. In diesem Zusammenhang ist es bevorzugt, dass die Sensoranordnung einen Laserscanner zur Objekterfassung in dem Zielbereich aufweist. Folglich kann die Sensoranordnung bzw. die Wandleranordnung auch einen Laserstrahler zum Aussenden von Laserstrahlen in den Zielbereich aufweisen. Vorschlagsgemäß umfasst die Wandleranordnung eine Leuchtdiodenanordnung zum Aussenden von farbigem Licht in den Zielbereich.

Bei dem vorschlagsgemäßen Fahrzeug ist die Sensoranordnung - und vorzugsweise der Laserscanner - zur Erfassung einer Benutzerbewegung in dem Zielbereich eingerichtet. Diese Benutzerbewegung kann dann auf grds. beliebige Art und Weise verarbeitet werden. Das vorschlagsgemäße Fahrzeug ist dadurch gekennzeichnet, dass es eine Verarbeitungsvorrichtung zum Auslösen einer Betätigung basierend auf der erfassten Benutzerbewegung aufweist. Diese Betätigung kann sich wiederum auf eine grds. beliebige Vorrichtung des Fahrzeugs beziehen.

Bei dieser Verarbeitungsvorrichtung kann es sich um ein Rechnersystem handeln. Vorzugsweise ist die Verarbeitungsvorrichtung zur Ansteuerung und zum Auslesen der Wandleranordnung mit dieser nachrichtentechnisch gekoppelt.

Das vorschlagsgemäße Fahrzeug weist eine Türanordnung - bei der es sich vorzugsweise um eine Schiebetüranordnung handelt - mit einem verstellbaren Türflügel zum wechselweisen Öffnen und Schließen der Türöffnung auf. Die Schiebetüranordnung kann auch mehrere verstellbare Türflügel aufweisen. Das vorschlagsgemäße Fahrzeug ist weiter dadurch gekennzeichnet, dass die Verarbeitungsvorrichtung zum Verstellen des Türflügels basierend auf der erfassten Benutzerbewegung eingerichtet ist. Auf diese Weise kann die obige Sensoranordnung einen berührungslos arbeitenden Mechanismus zum Öffnen der Türanordnung bereitstellen.

Gemäß einer bevorzugten Ausführungsform ist vorgesehen, dass der Zielbereich einen Bedienbereich umfasst, welcher im Schließzustand des Türflügels außerhalb der Wagenhülle vor einem Bedienfeld angeordnet ist. Auf diese Weise kann eine Benutzerbewegung in diesem Bedienbereich vor dem Bedienfeld erfasst und auf die Benutzerbewegung reagiert werden. Gemäß einer ersten bevorzugten Variante ist das Bedienfeld auf dem Türflügel angeordnet. Gemäß einer weiteren bevorzugten Variante ist das Bedienfeld auf einer zu dem Türflügel benachbarten Seitenwand der Wagenhülle angeordnet ist.

Vorschlagsgemäß ist die Leuchtdiodenanordnung zum Aussenden von farbigem Licht eingerichtet und dazu eingerichtet, eine Farbe oder einen Zielbereich des ausgesendeten Lichts basierend auf einem Verriegelungszustand der Türanordnung zu bestimmen. So könnte etwa die Leuchtdiodenanordnung dazu eingerichtet sein, in einem entriegelten Verriegelungszustand der Türanordnung grünes Licht auszusenden und in einem verriegelten Verriegelungszustand der Türanordnung rotes Licht auszusenden. Auf diese Weise kann einem Benutzer signalisiert werden, ob die Türanordnung aktuell geöffnet werden kann - entsprechend einer Verstellung des Türflügels - oder nicht. Dabei kann der obige Zielbereich das obige Bedienfeld umfassen oder ihm entsprechen.

Neben einer solchen berührungslosen Bedienmöglichkeit kann die Sensoranordnung auch weitere Funktionalitäten bieten. So ist eine bevorzugte Ausführungsform dadurch gekennzeichnet, dass der Zielbereich einen Verstellbereich des Türflügels umfasst. Dann ist es bevorzugt, dass die Sensoranordnung zur Erfassung eines Verklemmens des Türflügels im Verstellbereich eingerichtet ist. Auf diese Weise kann ein Verklemmschutz bereitgestellt sein. Ebenso kann es sein, dass die Sensoranordnung zur Erfassung eines Hindernisses im Verstellbereich eingerichtet ist. Gemäß dieser Variante kann ein Verklemmen des Türflügels bereits dadurch verhindert werden, dass bei Erfassung eines Hindernisses im Verstellbereich ein Verstellen des Türflügels gehemmt wird. Daher ist es bevorzugt, dass die Verarbeitungsvorrichtung dazu eingerichtet ist, bei Erfassen eines Hindernisses im Verstellbereich eine Betätigung des Türflügels zu unterdrücken.

Eine weitere bevorzugte Ausführungsform ist dadurch gekennzeichnet, dass die Wagenhülle eine bombierte Seitenwand aufweist, dass die Wandleranordnung im eingefahrenen Zustand in Seitenrichtung hinter der Ausdehnung der bombierten Seitenwand zurückbleibt und dass die Wandleranordnung im ausgefahrenen Zustand in Seitenrichtung mindestens die Ausdehnung der bombierten Seitenwand aufweist. Eine bombierte Seitenwand liegt dann vor, wenn die Seitenwand in einem Querschnitt konvex und folglich nach außen gewölbt ist. Unter der Ausdehnung der bombierten Seitenwand wird dann hier und nachfolgend die maximale Ausdehnung der Seitenwand in horizontaler Querrichtung - also der Seitenrichtung - gemäß dem Fahrzeuglichtraumprofil verstanden. Der Querschnitt bezieht sich dabei auf die Fahrtrichtung des Fahrzeugs, was regelmäßig der Längsrichtung des Fahrzeugs entspricht. Die obige Bombierung hat zur Folge, dass eine Wandleranordnung, deren Position insbesondere oberhalb der Bombierung entlang des konvexen Verlaufs der Seitenwand ist, nicht oder nur schwierig auf einen Zielbereich gerichtet sein kann, welcher bezogen auf die Wandleranordnung am oder jenseits des Scheitelpunkts der Bombierung liegt. Das Richten auf einen solchen Zielbereich wird dann dadurch ermöglicht, dass die Ausfahrmechanik die Wandleranordnung zumindest bis zur Ausdehnung der bombierten Seitenwand verstellt. Hier kann es insbesondere bevorzugt sein, dass die Wandleranordnung im ausgefahrenen Zustand in Seitenrichtung im Wesentlichen die Ausdehnung der bombierten Seitenwand aufweist. Eine im Wesentlichen vertikale Ausrichtung der Wandleranordnung führt dann dazu, dass der Zielbereich im Wesentlichen auf den Scheitelpunkt der Bombierung gerichtet ist.

Grundsätzlich ist die Art und Weise beliebig, auf welche die Ausfahrmechanik die Wandleranordnung verstellt. Gemäß einer bevorzugten Ausführungsform ist speziell vorgesehen, dass die Ausfahrmechanik eine um die Fahrtrichtung schwenkbare Achse, einen Antrieb zum Schwenken der Achse und einen an der schwenkbaren Achse befestigten Schwenkarm aufweist, dass die Wandleranordnung an dem Schwenkarm befestigt ist und dass zum Verstellen der Wandleranordnung der Antrieb die Achse verschwenkt. Weiter ist bevorzugt, dass die Ausfahrmechanik einen Führungshebel zur Ausrichtung der Wandleranordnung aufweist, welcher Führungshebel mit der Wandleranordnung gekoppelt ist. Der Führungshebel reduziert die Bewegung der Wandleranordnung auf einen Freiheitsgrad, insbesondere wenn, wie ebenso bevorzugt, die Wandleranordnung ihrerseits schwenkbar an dem Schwenkarm befestigt ist.

Schließlich ist eine weitere Ausführungsform dadurch gekennzeichnet, dass das Fahrzeug ein außen an einer Wagenwand angeordnetes Wandlergehäuse zur Aufnahme der Wandleranordnung und der Ausfahrmechanik aufweist. Ein solches Wandlergehäuse schützt die Wandleranordnung vor Beschädigungen oder Verunreinigungen. Bevorzugt ist vorgesehen, dass ein Schutzblech des Wandlergehäuses fest mit der Wandleranordnung verbunden ist, sodass im eingefahrenen Zustand der Wandleranordnung das Schutzblech das Wandlergehäuse im Wesentlichen vollständig nach außen abschließt.

Weitere vorteilhafte und bevorzugte Ausgestaltungen ergeben sich aus der nachfolgenden Beschreibung mit Bezug auf die Figuren. In der lediglich Ausführungsbeispiele wiedergebenden Zeichnung zeigt
- Fig. 1: eine perspektivische Seitenansicht auf einen Teil eines ersten Ausführungsbeispiels eines Fahrzeugs mit einer Wandleranordnung und
- Fig. 2: eine perspektivische Detailansicht auf die Wandleranordnung eines zweiten Ausführungsbeispiels eines Fahrzeugs.

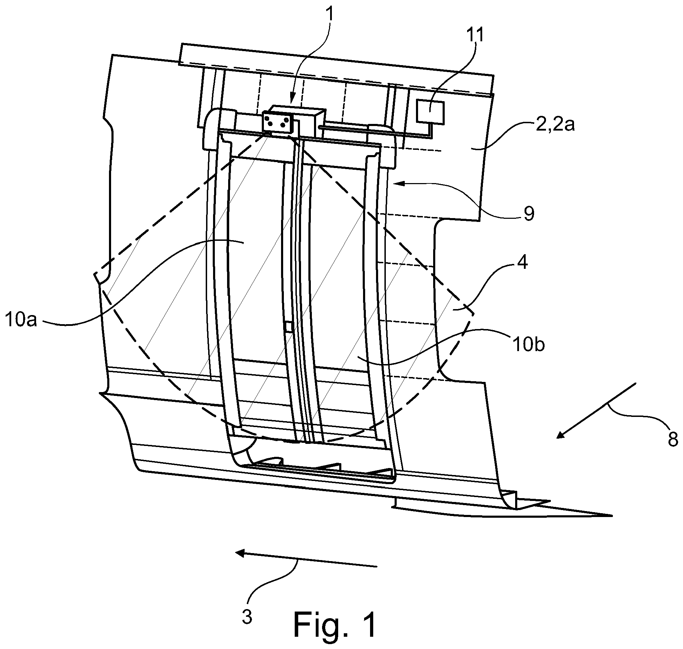

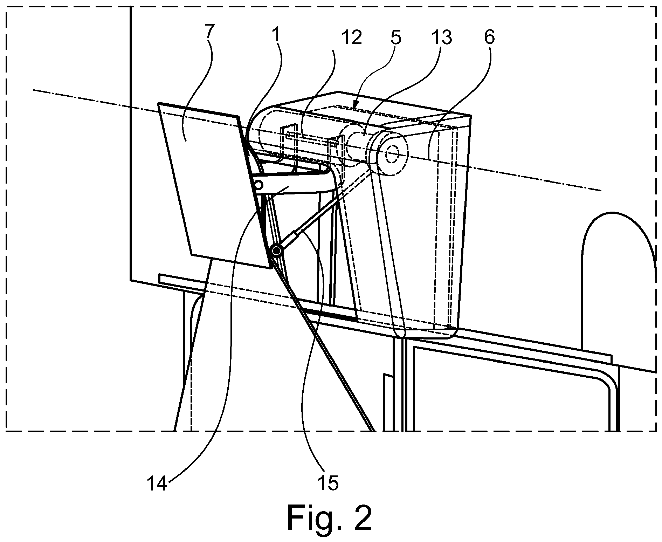

In der Fig. 1 ist ein Teil eines Schienenfahrzeugs für den öffentlichen Personenverkehr mit einer Wandleranordnung 1 dargestellt, wobei die in der Fig. 2 dargestellte Wandleranordnung 1 in den hier relevanten und speziell beschriebenen Einzelheiten der Wandleranordnung 1 aus der Fig.1 entspricht, sodass die nachfolgenden Ausführungen für beide Ausführungsbeispiele gleichermaßen gelten.

Das Fahrzeug der Fig. 1 weist eine Wandleranordnung 1 auf, bei welcher Wandleranordnung 1 es sich auch um eine Sensoranordnung 1a handelt und welche vorliegend einen Infrarotsensor sowie eine Leuchtdiodenanordnung zum Aussenden von Infrarotstrahlen umfasst, wobei dann der Infrarotsensor zur Erfassung der reflektierten Infrarotstrahlen eingerichtet ist.

Eine Wagenhülle 2, von welcher in der Fig. 1 speziell eine Seitenwand 2a des Fahrzeugs dargestellt ist, definiert ein Fahrzeuglichtraumprofil in Fahrtrichtung 3 des Schienenfahrzeugs. Die Wandleranordnung 1 ist auf einen Zielbereich 4 gerichtet, welcher kreisscheibenartig von der Wandleranordnung 1 ausgeht und im Wesentlichen vertikal nach unten gerichtet ist. Dieser Zielbereich 4 entspricht demjenigen Bereich, in welchen einerseits die Leuchtdiodenanordnung Infrarotstrahlen aussendet und aus welchem der Infrarotsensor reflektierte Infrarotstrahlen erfasst.

Das Fahrzeug weist ferner eine in der Fig. 2 dargestellte Ausfahrmechanik 5 auf, welche die Wandleranordnung 1 zwischen dem in der Fig. 2 dargestellten, ausgefahrenen Zustand und einem hier nicht dargestellten, eingefahrenen Zustand verstellen kann. Aus der Darstellung des Wandlergehäuses 6 und des fest mit der Wandleranordnung 1 verbundenen Schutzbleches 7 in der Fig. 2, welches im eingefahrenen Zustand der Wandleranordnung 1 zum vollständigen Abschluss des Wandlergehäuses 6 führt, lässt sich auch der eingefahrene Zustand 1 der Wandleranordnung 1 entnehmen.

Erkennbar ist aus beiden Figuren, dass die Wandleranordnung 1 im dargestellten, ausgefahrenen Zustand derart aus der Wagenhülle 2 im Übrigen herausragt, dass sie das Fahrzeuglichtraumprofil in einer Seitenrichtung 8 quer zur Fahrtrichtung 3 gegenüber dem eingefahrenen Zustand erweitert.

Das Fahrzeug weist ferner eine Schiebetüranordnung 9 mit verstellbaren Türflügeln 10a, b zum Öffnen und Schließen der Türöffnung auf, welche Türöffnung dem Ein- und Ausstieg zum bzw. aus dem Fahrgastraum dient. Die Darstellung der Fig. 1 zeigt dabei die Türflügel 10a, b in ihrer Schließposition. Die Wandleranordnung 1 ist dazu eingerichtet, in dem Zielbereich 4 ein Objekt und damit ein Hindernis zu erkennen, wenn die Türflügel 10a, b der Schiebetüranordnung 9 in ihrer offenen Position sind. In dieser Situation kann dann die Schließbewegung der Türflügel 10a, b während des Vorhandenseins des Hindernisses unterdrückt werden. Eine entsprechende Verarbeitungsvorrichtung 11 zur Ansteuerung und zum Auslesen der Wandleranordnung 1 sowie zur Betätigung der Türflügel 10a, b ist schematisch in der Fig. 1 dargestellt.

Einzelheiten der Ausfahrmechanik 5 sind in der Fig. 2 erkennbar. Die Ausfahrmechanik 5 weist eine Achse 12 auf, welche von einem Antrieb 13 um die Fahrtrichtung 3 geschwenkt werden kann. An der Achse 12 ist ein Schwenkarm 14 befestigt, an welchem wiederum die Wandleranordnung 1 schwenkbar befestigt ist. Zur Ausrichtung der Wandleranordnung 1 weist die Ausfahrmechanik 5 ferner einen mit der Wandleranordnung 1 gekoppelten Führungshebel 15 auf.

## Patentansprüche

1. Fahrzeug, insbesondere Fahrzeug des öffentlichen Personenverkehrs, mit einer Wandleranordnung (1) zur Signalumwandlung und mit einer Wagenhülle (2), welche Wagenhülle (2) ein Fahrzeuglichtraumprofil in Fahrtrichtung (3) des Fahrzeugs definiert, wobei die Wandleranordnung (1) auf einen von der Wandleranordnung (1) beabstandeten Zielbereich (4) außerhalb der Wagenhülle (1) gerichtet ist, wobei das Fahrzeug eine Ausfahrmechanik (5) zum Verstellen der Wandleranordnung (1) zwischen einem eingefahrenen und einem ausgefahrenen Zustand aufweist und wobei die Wandleranordnung (1) eine Sensoranordnung (1a) zur Erfassung in dem Zielbereich (4) aufweist, wobei das Fahrzeug eine Türanordnung mit einem verstellbaren Türflügel (10a, b) zum wechselweisen Öffnen und Schließen der Türöffnung aufweist, wobei die Sensoranordnung (1a) zur Erfassung einer Benutzerbewegung in dem Zielbereich (4) eingerichtet ist wobei die Wandleranordnung (1) eine Leuchtdiodenanordnung zum Aussenden von farbigem Licht in den Zielbereich (4) aufweist, **dadurch gekennzeichnet, dass** die Leuchtdiodenanordnung dazu eingerichtet ist, eine Farbe oder einen Zielbereich (4) des ausgesendeten Lichts basierend auf einem Verriegelungszustand der Türanordnung zu bestimmen, dass das Fahrzeug eine Verarbeitungsvorrichtung (11) zum Auslösen einer Betätigung basierend auf der erfassten Benutzerbewegung aufweist und dass die Verarbeitungsvorrichtung (11) zum Verstellen des Türflügels (10a, b) basierend auf der erfassten Benutzerbewegung eingerichtet ist.

2. Fahrzeug nach Anspruch 1, **dadurch gekennzeichnet, dass** die Wandleranordnung (1) im ausgefahrenen Zustand gegenüber dem eingefahrenen Zustand das Fahrzeuglichtraumprofil quer zur Fahrtrichtung (3), vorzugsweise horizontal, erweitert.

3. Fahrzeug nach Anspruch 1 oder 2, **dadurch gekennzeichnet, dass** die Wagenhülle (2) eine Türöffnung in der Wagenhülle (2) zum Ein- und Ausstieg aufweist, insbesondere, dass der Zielbereich (4) im ausgefahrenen Zustand der Wandleranordnung (1) einen unteren Bereich umfasst, welcher sich unterhalb, vorzugsweise im Wesentlichen senkrecht unterhalb, der Wandleranordnung (1) befindet.

4. Fahrzeug nach einem der Ansprüche 1 bis 3, **dadurch gekennzeichnet, dass** der Zielbereich (4) im Wesentlichen kreissektorartig ausgeformt ist und von der Wandleranordnung (1) ausgeht, vorzugsweise, dass der Zielbereich (4) im Wesentlichen vertikal nach unten ausgerichtet ist.

5. Fahrzeug nach einem der Ansprüche 1 bis 4, **dadurch gekennzeichnet, dass** das Fahrzeug ein Schienenfahrzeug zur Personenbeförderung oder ein Bus zur Personenbeförderung ist.

6. Fahrzeug nach einem der Ansprüche 1 bis 5, **dadurch gekennzeichnet, dass** die Sensoranordnung (1a) eine elektromagnetische Sensoranordnung (1a), insbesondere eine Infrarot-Sensoranordnung, ist.

7. Fahrzeug nach einem der Ansprüche 1 bis 6, **dadurch gekennzeichnet, dass** die Sensoranordnung (1a) einen Laserscanner zur Objekterfassung in dem Zielbereich (4) aufweist.

8. Fahrzeug nach Anspruch 7, **dadurch gekennzeichnet, dass** der Laserscanner zur Erfassung einer Benutzerbewegung in dem Zielbereich (4) eingerichtet ist.

9. Fahrzeug nach einem der Ansprüche 1 bis 8, **dadurch gekennzeichnet, dass** die Türanordnung eine Schiebetüranordnung (9) ist.

10. Fahrzeug nach einem der Ansprüche 1 bis 9, **dadurch gekennzeichnet, dass** der Zielbereich (4) einen Bedienbereich umfasst, welcher im Schließzustand des Türflügels (10a, b) außerhalb der Wagenhülle (2) vor einem Bedienfeld angeordnet ist, vorzugsweise dass das Bedienfeld auf dem Türflügel (10a, b) angeordnet ist oder dass das Bedienfeld auf einer zu dem Türflügel (10a, b) benachbarten Seitenwand der Wagenhülle angeordnet ist.

11. Fahrzeug nach einem der Ansprüche 1 bis 10, **dadurch gekennzeichnet, dass** der Zielbereich (4) einen Verstellbereich des Türflügels (10a, b) umfasst, insbesondere, dass die Sensoranordnung (1a) zur Erfassung eines Hindernisses im Verstellbereich eingerichtet ist, vorzugsweise, dass die Verarbeitungsvorrichtung (11) dazu eingerichtet ist, bei Erfassen eines Hindernisses im Verstellbereich eine Betätigung des Türflügels (10a, b) zu unterdrücken.

12. Fahrzeug nach einem der Ansprüche 1 bis 11, **dadurch gekennzeichnet, dass** die Wagenhülle (2) eine bombierte Seitenwand aufweist, dass die Wandleranordnung im eingefahrenen Zustand in Seitenrichtung (8) hinter der Ausdehnung der bombierten Seitenwand zurückbleibt und dass die Wandleranordnung (1) im ausgefahrenen Zustand in Seitenrichtung (8) mindestens die Ausdehnung der bombierten Seitenwand aufweist, vorzugsweise, dass die Wandleranordnung (1) im ausgefahrenen Zustand in Seitenrichtung im Wesentlichen die Ausdehnung der bombierten Seitenwand aufweist.

13. Fahrzeug nach einem der Ansprüche 1 bis 12, **dadurch gekennzeichnet, dass** die Ausfahrmechanik (5) eine um die Fahrtrichtung (3) schwenkbare Achse (12), einen Antrieb (13) zum Schwenken der Achse (12) und einen an der schwenkbaren Achse (12) befestigten Schwenkarm (14) aufweist, dass die Wandleranordnung (1) an dem Schwenkarm (14) befestigt ist und dass zum Verstellen der Wandleranordnung (1) der Antrieb (13) die Achse verschwenkt, vorzugsweise, dass die Ausfahrmechanik (5) einen Führungshebel (15) zur Ausrichtung der Wandleranordnung (1) aufweist, welcher Führungshebel (15) mit der Wandleranordnung (1) gekoppelt ist.

14. Fahrzeug nach einem der Ansprüche 1 bis 13, **dadurch gekennzeichnet, dass** das Fahrzeug ein außen an einer Wagenwand angeordnetes Wandlergehäuse (6) zur Aufnahme der Wandleranordnung (1) und der Ausfahrmechanik (5) aufweist, vorzugsweise, dass ein Schutzblech (7) des Wandlergehäuses (6) fest mit der Wandleranordnung (1) verbunden ist, sodass im eingefahrenen Zustand der Wandleranordnung (1) das Schutzblech (7) das Wandlergehäuse (6) im Wesentlichen vollständig nach außen abschließt.

## Claims

1. A vehicle, in particular a vehicle used in public passenger transportation, having a converter arrangement (1) for converting signals and having a carriage shell (2) which carriage shell (2) defines a vehicle light space profile in the direction of travel (3) of the vehicle, wherein the converter arrangement (1) is pointed toward a target area (4) located at a distance from the converter arrangement (1) outside the carriage shell (1), wherein the vehicle has an extending mechanism (5) for displacing the converter arrangement (1) between a retracted and an extended state, and wherein the converter arrangement (1) has a sensor arrangement (1a) for detecting objects in the target area (4), wherein the vehicle has a door arrangement with a displaceable door panel (10a, b) for alternatively opening and closing the door opening, wherein the sensor arrangement (1a) is set up for detecting a user movement in the target area (4), wherein the converter arrangement (1) has a light-emitting diode arrangement for emitting colored light into the target area (4), **characterized in that** the light-emitting diode arrangement is set up to determine a colour or a target area (4) of the emitted light based on a locking state of the door arrangement, that the vehicle has a processing device (11) for triggering an actuation based on the detected user movement, and that the processing device (11) is set up to displace the door panel (10a, b) based on the detected user movement.

2. The vehicle according to Claim 1, **characterized in that** the converter arrangement (1), in its extended state, expands the vehicle light space profile transversely, preferably horizontally, to the direction of travel (3) compared to its retracted state.

3. The vehicle according to Claim 1 or 2, **characterized in that** the carriage shell (2) has a door opening in the carriage shell (2) for entering and exiting, in particular that the target area (4) in the extended state of the converter arrangement (1) comprises a lower area, which is located below the converter arrangement (1), preferably located below the same at an essentially right angle.

4. The vehicle according to any one of Claims 1 to 3, **characterized in that** the target area (4) is essentially formed in the shape of a circle segment and that it extends from the converter arrangement (1), preferably that the target area (4) is essentially oriented vertically downwards.

5. The vehicle according to any one of Claims 1 to 4, **characterized in that** the vehicle is a rail vehicle for transporting passengers or a bus for transporting passengers.

6. The vehicle according to any one of Claims 1 to 5, **characterized in that** the sensor arrangement (1a) is an electromagnetic sensor arrangement (1a), in particular an infrared sensor arrangement.

7. The vehicle according to any one of Claims 1 to 6, **characterized in that** the sensor arrangement (1a) has a laser scanner for detecting objects in the target area (4).

8. The vehicle according to Claim 7, **characterized in that** the laser scanner is set up for detecting a user movement in the target area (4).

9. The vehicle according to any one of Claims 1 to 8, **characterized in that** the door arrangement is a sliding door arrangement (9).

10. The vehicle according to any one of Claims 1 to 9, **characterized in that** the target area (4) comprises an operating area, which, in the closed state of the door panel (10a, b), is arranged outside of the carriage shell (2) in front of a control panel, preferably that the control panel is arranged on the door panel (10a, b) or that the control panel is arranged on a side wall of the carriage shell adjacent to the door panel (10a, b).

11. The vehicle according to any one of Claims 1 to 10, **characterized in that** the target area (4) comprises a displacement area of the door panel (10a, b), in particular that the sensor arrangement (1a) is set up for detecting an obstacle in the displacement area, preferably that the processing device (11) is set up to block an actuation of the door panel (10a, b) when detecting an obstacle in the displacement area.

12. The vehicle according to any one of Claims 1 to 11, **characterized in that** the carriage shell (2) has a cambered side wall, that the converter arrangement, in its retracted state, is recessed behind the expansion of the cambered side wall in a lateral direction (8), and that the converter arrangement (1), in its extended state, extends at least as far in a lateral direction (8) as does the cambered side wall, preferably that the converter arrangement (1), in its extended state, essentially extends as far in a lateral direction as does the cambered sidewall.

13. The vehicle according to any one of Claims 1 to 12, **characterized in that** the extending mechanism (5) has an axle pivoting around the direction of travel (3), a drive (13) for pivoting the axis (12), and a pivoting arm (14) attached to the pivoting axis (12), that the converter arrangement (1) is attached to the pivoting arm (14), and that the drive (13) pivots the axis for displacing the converter arrangement (1), preferably that the extending mechanism (5) has a guide lever (15) for aligning the converter arrangement (1), which guide lever (15) is coupled with the converter arrangement (1).

14. The vehicle according to any one of Claims 1 to 13, **characterized in that** the vehicle has a converter housing (6) arranged on the outside of a carriage wall for accommodating the converter arrangement (1) and the extending mechanism (5), preferably that a guard plate (7) of the converter housing (6) is firmly connected to the converter arrangement (1), such that the guard plate (7) essentially completely closes the converter housing (6) to the outside in the retracted state of the converter arrangement (1).

## Revendications

1. Véhicule, en particulier véhicule de transport public, comportant un dispositif de convertisseur (1) pour la conversion de signaux et comportant un capot de voiture (2), lequel capot de voiture (2) définit un profil de dégagement du véhicule dans la direction de déplacement (3) du véhicule, dans lequel le dispositif de convertisseur (1) est dirigée vers une zone cible (4) espacée de le dispositif de convertisseur (1) à l'extérieur du boîtier de voiture (1), dans lequel le véhicule a un mécanisme d'extension (5) pour régler le dispositif de convertisseur (1) entre un état rétracté et étendu et dans lequel le dispositif de convertisseur (1) a un agencement de capteur (la) pour la détection dans la zone cible (4), dans lequel le véhicule présente un agencement de porte avec un battant de porte réglable (10a, b) pour ouvrir et fermer alternativement l'ouverture de porte, l'agencement de capteur (la) étant configuré pour détecter le mouvement de l'utilisateur dans la zone cible (4), le dispositif de convertisseur (1) étant un agencement de diodes électroluminescentes pour l'émission d'une lumière colorée dans la zone cible (4), **caractérisé en ce que** l'agencement de diodes électroluminescentes est configuré pour déterminer une couleur ou une zone cible (4) de la lumière émise sur la base d'un état verrouillé de l'agencement de porte, que le véhicule possède un dispositif de traitement (11) pour le déclenchement d'un actionnement basé sur le mouvement d'utilisateur détecté et que le dispositif de traitement (11) est configuré pour régler le battant de porte (10a, b) sur la base du mouvement d'utilisateur détecté.

2. Véhicule selon la revendication 1, **caractérisé en ce que** le dispositif de convertisseur (1) en l'état déployé par rapport à l'état rétracté élargit le profil de dégagement du véhicule transversalement au sens de marche (3), de préférence horizontalement.

3. Véhicule selon la revendication 1 ou 2, **caractérisé en ce que** le caisson de voiture (2) présente une ouverture de porte dans le caisson de voiture (2) pour entrer et sortir, notamment que la zone cible (4) à l'état étendu de l'agencement convertisseur (1) comprend la zone inférieure, qui se trouve en dessous, de préférence sensiblement perpendiculaire en dessous, du dispositif de convertisseur (1).

4. Véhicule selon une des revendications 1 à 3, **caractérisé en ce que** la zone cible (4) est formée sensiblement à la manière d'un secteur circulaire et ressort du dispositif de convertisseur (1), de préférence **en ce que** la zone cible (4) est orientée essentiellement verticalement vers le bas.

5. Véhicule selon une des revendications 1 à 4, **caractérisé en ce que** le véhicule est un véhicule ferroviaire pour le transport de passagers ou un bus pour le transport de passagers.

6. Véhicule selon une des revendications 1 à 5, **caractérisé en ce que** l'agencement de capteur (la) est un agencement de capteur électromagnétique (la), notamment un agencement de capteur infrarouge.

7. Véhicule selon une des revendications 1 à 6, **caractérisé en ce que** l'agencement de capteur (la) comporte un scanner laser pour la détection d'objets dans la zone cible (4).

8. Véhicule selon la revendication 7, **caractérisé en ce que** le scanner laser est configuré pour détecter un mouvement d'utilisateur dans la zone cible (4).

9. Véhicule selon une des revendications 1 à 8, **caractérisé en ce que** l'agencement de porte est un agencement de porte coulissante (9).

10. Véhicule selon une des revendications 1 à 9, **caractérisé en ce que** la zone cible (4) comprend une zone de manœuvre, qui est disposée à l'état fermé du vantail (10a, b) à l'extérieur du capot de la voiture (2) devant un panneau de commande, de préférence **en ce que** le panneau de commande est disposé sur le battant de porte (10a, b) ou que le panneau de commande est disposé sur une paroi latérale du capot de voiture qui est adjacente au battant de porte (10a, b).

11. Véhicule selon une des revendications 1 à 10, **caractérisé en ce que** la zone cible (4) comprend une zone de réglage du battant de porte (10a, b), notamment que l'agencement de capteur (la) pour détecter un obstacle est installé dans la zone de réglage, de préférence **en ce que** le dispositif de traitement (11) est configuré pour supprimer l'actionnement du battant de porte (10a, b) lorsqu'un obstacle est détecté dans la zone de réglage.

12. Véhicule selon une des revendications 1 à 11, **caractérisé en ce que** le capot de voiture (2) présente une paroi latérale bombée, que le dispositif de convertisseur à l'état rétracté dans le sens latéral (8) reste derrière l'expansion de la paroi latérale bombée et que le dispositif de convertisseur (1) dans l'état étendu dans la direction latérale (8) a au moins l'étendue de la paroi latérale cambrée, de préférence que le dispositif de convertisseur (1) a essentiellement l'extension de la paroi latérale cambrée dans l'état étendu dans la direction latérale.

13. Véhicule selon une des revendications 1 à 12, **caractérisé en ce que** le mécanisme d'extension (5) a un axe (12) qui peut pivoter autour du sens de marche (3), un entraînement (13) pour faire pivoter l'axe (12) et un bras pivotant (14) fixé à l'axe pivotant (12), que le dispositif de convertisseur (1) est fixé au bras pivotant (14) et que à des fins d'ajustement de le dispositif de convertisseur (1) l'entraînement (13) fait pivoter l'axe, de préférence que le mécanisme d'extension (5) possède un levier de guidage (15) pour aligner le dispositif de convertisseur (1), lequel levier de guidage (15) est couplé au dispositif de convertisseur (1).

14. Véhicule selon une des revendications 1 à 13, **caractérisé en ce que** le véhicule présente un boîtier convertisseur (6) disposé à l'extérieur d'une paroi de voiture pour recevoir le dispositif de convertisseur (1) et le mécanisme d'extension (5), de préférence qu'une plaque de protection (7) du boîtier de convertisseur (6) est fermement raccordée au dispositif de convertisseur (1), de sorte que dans l'état rétracté du dispositif de convertisseur (1), la plaque de protection (7) ferme essentiellement complètement le boîtier du convertisseur (6) vers l'extérieur.
